# EUROPEAN PATENT APPLICATION

(11) **EP 0 705 877 A1**
(43) Date of publication of application: **10.04.1996**
(21) Application number: 94307301.5
(22) Date of filing: 05.10.1994
(51) Int. Cl.: C08K 13/04, C08L 77/00

(54) **Whisker-reinforced thermoplastic resin composition**

(71) Applicant: Tonen Chemical Corporation, Chuo-Ku Tokyo (JP)
(72) Inventor: Honda, Toshikazu, c/o T. D. C. of Tonen Chem. Co., Kanagawa-ken (JP); Sezume, Tadashi, c/o T. D. C. of Tonen Chem. Co., Kanagawa-ken (JP)
(74) Representative: Towler, Philip Dean

(57) **Abstract**

A whisker-reinforced thermoplastic resin composition is disclosed which includes (a) 50-97 weight % of an amorphous nylon; (b) 3-50 weight % of whisker; and (c) 0.1-5 parts by weight of an ethylene-bis(stearylamide) compound having a softening point of 100-200°C, per 100 parts by weight of the total of (a) and (b). A suitable whisker as component (b) is potassium titanate whisker having an average length of 10-20 µm and an average diameter of 0.2-0.5 µm.

As component (a) of the resin composition may be employed alternatively 10-97 weight % of an amorphous nylon and 0-40 weight % of a modified polyethylene, which is high-density polyethylene modified (at least partially) with an unsaturated carboxylic acid or its anhydride.

The compositions of the invention combine excellent mechanical properties with excellent release characteristics during manufacture. They are highly suitable for use as materials for e.g. small mechanical parts for office equipment, gears, sliding parts.

## Description

### BACKGROUND OF THE INVENTION

The present invention relates to a whisker-reinforced thermoplastic resin composition mainly composed of an amorphous nylon, and more particularly to a whisker-reinforced thermoplastic resin composition having excellent mechanical properties and release characteristics.

Nylon (polyamide) has excellent mechanical properties such as bending strength, flexural modulus, impact strength, scratch resistance, etc., and particularly composite materials of nylon and glass fibers, whisker, etc. show improved mechanical strength due to reinforcing effects of glass fibers, etc. Accordingly, they are widely used in various products such as small parts, thin parts, parts with complicated shapes, etc.

However, since nylon has high water absorption characteristics, the above composite materials are likely to suffer from a drastic decrease in mechanical strength depending on use conditions such as high-humidity conditions, water-wetting conditions, etc. Also, since the dimensions of the composite materials may change by water absorption, they are not suitable for high-precision parts.

Under such circumstances, it may be contemplated to combine nylon with high-density polyethylene modified with unsaturated carboxylic acid or its anhydride, and reinforcing fillers such as glass fibers, whisker, etc. However, composite materials of nylon, modified polyethylene and glass fibers suffer from an extreme increase in kinetic friction coefficient when wetted, because nylon highly absorbs water. Accordingly, the composite materials show extremely deteriorated wear resistance.

In order to solve the problems of such nylon compositions, it has been contemplated to use amorphous nylon as a nylon component, but amorphous nylon-based compositions tend to exhibit rapidly increasing mechanical strength upon being cooled in a molding die, thereby making the release load excessive in the case of deep moldings, and in some cases causing cracks in the resultant moldings.

To cope with such problems, the addition of a release agent may be contemplated. However, when a generally used release agent such as polyethylene wax is added, the resultant composition shows decreased mechanical strength and still insufficient release characteristics.

### OBJECT AND SUMMARY OF THE INVENTION

Accordingly, an object of the present invention is to provide a whisker-reinforced thermoplastic resin composition having excellent mechanical properties and release characteristics.

As a result of intense research in view of the above object, the inventors have found that by adding a particular release agent having a softening point of 100-200°C to a composition of amorphous nylon (or resin components consisting of amorphous nylon and high-density polyethylene modified with unsaturated carboxylic acid or its anhydride) and whisker, it is possible to provide a whisker-reinforced thermoplastic resin composition with excellent release characteristics without suffering from a decease in mechanical properties. The present invention is based on this finding.

Thus, the whisker-reinforced thermoplastic resin composition according to the first embodiment of the present invention comprises;
(a) 50-97 weight % of an amorphous nylon;
(b) 3-50 weight % of whisker; and
(c) 0.1-5 parts by weight of an ethylene-bis(stearylamide) compound having a softening point of 100-200°C, per 100 parts by weight of the total of (a) and (b).

The whisker-reinforced thermoplastic resin composition according to the second embodiment of the present invention comprises;
(a) 10-97 weight % of an amorphous nylon;
(b) 0-40 weight % of a modified polyethylene, which is high-density polyethylene modified with unsaturated carboxylic acid or its anhydride;
(c) 3-50 weight % of whisker; and
(d) 0.1-5 parts by weight of an ethylene-bis(stearylamide) compound having a softening point of 100-200°C, per 100 parts by weight of the total of (a), (b) and (c).

### DETAILED DESCRIPTION OF THE INVENTION

### [1] First Whisker-Reinforced Thermoplastic Resin Composition

### (1) Components

### (a) Amorphous nylon

The amorphous nylon used in the present invention may be an amorphous polyamide as disclosed in Japanese Patent Laid-Open No. 63-61040. Such amorphous nylon is derived from the following ingredients:
(A) 48-20 mol % of hexamethylenediamine and/or alkyl-substituted hexamethylenediamine;
(B) 2-30 mol % of bis(4-amino-cyclohexyl)-methane or its derivatives;
(C) 50-40 mol % of isophthalic acid or other aromatic or aliphatic dicarboxylic acid or derivatives thereof; and
(D) 0-10 mol % of terephthalic acid or derivatives thereof.

In the component (A), the alkyl-substituted derivatives of hexamethylenediamine may be N',N'-dimethyl hexamethylenediamine, N',N'-dibenzoyl hexamethylenediamine, etc.

In the component (B), the bis(4-amino-cyclohexyl)-methane derivatives having substituents at positions adjacent to an amino group may be alkyl-substituted diamines such as bis(4-amino-3-methyl-5-ethylcyclohexyl)-methane, bis(4-amino-3,5-diethylcyclohexyl)-methane, bis(4-amino-3-methyl-5-isopropylcyclohexyl)-methane, bis(4-amino-3,5-diisopropylcyclohexyl)-methane, bis(4-amino-3,5-dimethylcyclohexyl)-methane, bis(4-amino-3-methylcyclohexyl)-methane, bis(4-amino-3-ethylcyclohexyl)-methane, bis(4-amino-3-isopropylcyclohexyl)-methane, etc., or mixtures thereof. The methylene (-CH₂-) groups in the cyclohexane rings in these alkyl-substituted diamines may be substituted by ethylene, propylene, isopropylene or butylene.

In the component (C), the other aromatic or aliphatic dicarboxylic acids than isophthalic acid may be aromatic dicarboxylic acids such as orthophthalic acid; aliphatic dicarboxylic acids such as oxalic acid, malonic acid, succinic acid, dodecane dicarboxylic acid, etc.

The above-mentioned amorphous nylon preferably has a glass transition temperature (Tg) of 120-190°C.

### (b) Whisker

The whisker may be extremely thin, ceramic, crystalline fibers. It preferably has an average length of 10-20 µm and an average diameter of 0.2-0.5 µm. The whisker may be e.g. potassium titanate whisker, aluminium borate whisker, calcium carbonate whisker, magnesium hydroxide whisker, etc. Among them, potassium titanate whisker is particularly preferable.

The preferable potassium titanate whisker is represented by the general formula: K₂O·nTiO₂, and has an average length of 10-20 µm and an average diameter of 0.2-0.5 µm.

The whisker is preferably surface-coated with an epoxy-silane coupling agent, etc. to improve affinity to the amorphous nylon.

### (c) Ethylene-bis(stearylamide) compound

The ethylene-bis(stearylamide) compound is defined herein as ethylene-bis(stearylamide) having the following chemical structure:
C₁₇H₃₅CONHCH₂CH₂NHCOC₁₇H₃₅,
or its derivatives. Substituents may be alkyl groups or aryl groups, which are attached to the stearyl groups.

The ethylene-bis(stearylamide) compound has a softening point of 100-200°C, preferably 120-160°C. If the softening point of the ethylene-bis(stearylamide) compound is lower than 100°C, severe fuming may take place in the molding process. On the other hand, if the softening point exceeds 200°C, the resultant composition fails to show improved release characteristics.

### (d) Other components

The first whisker-reinforced thermoplastic resin composition of the present invention may further contain other additives such as inorganic fillers, thermal stabilizers, anti-oxidants, photo-stabilizers, flame retardants, plasticizers, anti-static agents, nucleating agents, etc. to improve its properties.

### (2) Proportions of Components

The amorphous nylon is 50-97 weight %, preferably 60-90 weight %, and the whisker is 3-50 weight %, preferably 10-40 weight %, based on 100 weight % of the total of the amorphous nylon and the whisker. When the amount of the amorphous nylon is less than 50 weight % (when the amount of the whisker exceeds 50 weight %), the resultant composition shows poor moldability. On the other hand, when the amount of the amorphous nylon is more than 97 weight % (when the amount of the whisker is less than 3 weight %), the resultant composition fails to show sufficient mechanical strength.

The amount of the ethylene-bis(stearylamide) compound is 0.1-5 parts by weight, preferably 0.5-2 parts by weight per 100 parts by weight of the total of the amorphous nylon and the whisker. When it is less than 0.1 parts by weight, sufficient improvement of release characteristics cannot be achieved. On the other hand, when more than 5 parts by weight of the ethylene-bis(stearylamide) compound is added, the resultant composition shows poor mechanical strength.

### (3) Production

The first whisker-reinforced thermoplastic resin composition of the present invention may be produced by blending the above-mentioned components, and dynamically heat-treating them by melt blending, etc. A blending apparatus of known type, e.g. an open type such as a mixing roll, or a non-open type such as a Banbury mixer, an extruder (including double-screw extruder), a kneader, a continuous mixer, etc. The blending may be conducted at 200-300°C, preferably 240-280°C.

### [2] Second Whisker-Reinforced Thermoplastic Resin Composition

### (1) Components

### (a) Amorphous nylon

The amorphous nylon in the second whisker-reinforced thermoplastic resin composition may be the same as in the first one.

### (b) Modified polyethylene

The modified polyethylene used in the present invention may be high-density polyethylene modified with unsaturated carboxylic acid or its anhydride.

High-density polyethylene to be modified is preferably linear polyethylene having a density of 0.941-0.968 g/cm³, particularly 0.955-0.961 g/cm³. The high-density polyethylene has a melt index (190°C, 2.16 kg) of 3-40 g/10 minutes, preferably 5-12 g/10 minutes.

The unsaturated carboxylic acid or its derivatives are monocarboxylic acids such as acrylic acid, methacrylic acid, etc.; dicarboxylic acids such as maleic acid, fumaric acid, itaconic acid, etc.; dicarboxylic anhydrides such as maleic anhydride, itaconic anhydride, endobicyclo-[2,2,1]-5-heptene-2,3-dicarboxylic acid (hymic anhydride), etc. Particularly dicarboxylic acids and their anhydrides are preferable.

The modified polyethylene may be in the form of a block copolymer, a graft copolymer, a random copolymer, or an alternating copolymer.

The proportion of the unsaturated carboxylic acid or its derivative in the modified polyethylene is preferably 0.1-1 weight %, more preferably 0.3-0.8 weight %. If the amount of the unsaturated carboxylic acid or its derivative is less than 0.1 weight %, sufficient compatibility of high-density polyethylene with nylon cannot be achieved. On the other hand, if the amount of the unsaturated carboxylic acid or its derivative exceeds 1 weight %, the resultant composition shows poor mechanical strength.

Such modified polyethylene can be produced by a melt blending method or a solution method. In the case of the melt blending, high-density polyethylene, a modifying monomer (unsaturated carboxylic acid or its derivative) and a catalyst are introduced into an extruder or a double-screw blender, etc., and blended at 180-230°C. Also, in the case of the solution method, the above ingredients are dissolved in an organic solvent such as xylene and stirred. In any case, usual radical polymerization catalysts may be used for the modification of high-density polyethylene. Such catalysts may preferably be peroxides such as benzoyl peroxide, lauroyl peroxide, di-tert-butyl peroxide, acetyl peroxide, tert-butyl perbenzoate, dicumyl peroxide, perbenzoic acid, peracetic acid, tert-butyl perpivalate, 2,5-dimethyl-2,5-di-(tert-butyl peroxy) hexyne, etc., diazo compounds such as azobisisobutyronitrile, etc. The amount of the catalyst is preferably 1-100 parts by weight per 100 parts by weight of the modifying monomer.

The modified polyethylene preferably has a melt index (MI, 190°C, 1.05 kg) of 1-20 g/10 minutes, preferably 3-10 g/10 minutes. The addition of such modified polyethylene serves to decrease the kinetic friction coefficient of the resultant composition.

Incidentally, in the present invention, an unmodified polyethylene may be added to improve the mechanical strength. When unmodified high-density polyethylene is added, its amount is preferably 70 weight % or less, more preferably 50 weight % or less, based on 100 weight % of the modified polyethylene + the unmodified high-density polyethylene. When the amount of the unmodified high-density polyethylene exceeds 70 weight %, the resultant composition is poor in mechanical strength such as impact strength due to low compatibility of high-density polyethylene with nylon.

### (b) Whisker

The whisker used here may be the same as in the first whisker-reinforced thermoplastic resin composition.

### (c) Ethylene-bis(stearylamide) compound

The ethylene-bis(stearylamide) compound used here may be the same as in the first whisker-reinforced thermoplastic resin composition.

### (d) Other components

The second whisker-reinforced thermoplastic resin composition may contain the same additives as in the first composition.

### (2) Proportions of Components

The amorphous nylon is 10-97 weight %, preferably 30-85 weight %, the modified polyethylene is 0-40 weight %, preferably 10-40 weight %, and the whisker is 3-50 weight %, preferably 5-40 weight %, based on 100 weight % of the total of the amorphous nylon, the modified polyethylene and the whisker. When the amount of the amorphous nylon is less than 10 weight %, the resultant composition shows poor mechanical strength. When the amount of the amorphous nylon is more than 97 weight %, the resultant composition shows a low retention of mechanical strength at the time of water absorption. Also, when the modified polyethylene is more than 40 weight %, the resultant composition shows poor mechanical strength. Further, when the whisker is less than 3 weight %, sufficient improvement of mechanical strength cannot be achieved. When the whisker is more than 50 weight %, the resultant composition shows poor moldability.

The amount of the ethylene-bis(stearylamide) compound is 0.1-5 parts by weight, preferably 0.5-2 parts by weight per 100 parts by weight of the total of the amorphous nylon, the modified polyethylene and the whisker. When it is less than 0.1 parts by weight, sufficient improvement of release characteristics cannot be achieved. On the other hand, when more than 5 parts by weight of the ethylene-bis(stearylamide) compound is added, the resultant composition shows poor mechanical strength.

### (3) Production

The second whisker-reinforced thermoplastic resin composition of the present invention may be produced by blending the above-mentioned components, and melt-blending them in the same manner as in the first whisker-reinforced thermoplastic resin composition.

Since the whisker-reinforced thermoplastic resin composition of the present invention comprises an amorphous nylon (or resin components consisting of amorphous nylon and high-density polyethylene modified with unsaturated carboxylic acid or its anhydride), whisker and a particular release agent having a softening point of 100-200°C, it shows dramatically improved release characteristics without suffering from a decrease in mechanical properties. The reasons therefor are not necessarily clear, but it may be considered that by blending an amorphous nylon, which is excellent in mechanical properties such as bending strength, flexural modulus, impact strength, scratch resistance as characteristics of nylon and shows little water absorption, with an ethylene-bis(stearylamide) compound having a particular softening point range, it is possible to drastically increase the internal lubrication of the resultant composition in a molding temperature range while keeping mechanical strength such as bending strength, flexural modulus, etc., thereby showing drastically improved release characteristics. Also, the modified polyethylene presumably serves to decrease the kinetic friction coefficient, thereby improving the wear resistance of the composition.

The present invention will be explained in further detail by way of the following Examples without intention of restricting the scope of the present invention to them. The starting materials (resin components and whisker) used in the Examples and Comparative Examples are as follows:
[1] Amorphous nylon
   - AmNy:: XE-3038, available from EMS, Tg: 140°C.
[2] Modified polyethylene
   - CMPE:: High-density polyethylene (density: 0.955 g/m³, MI (190°C, 2.16 kg): 20 g/10 minutes) modified with maleic anhydride at a graft ratio of 0.4 weight %.
[3] Potassium titanate whisker
   - K₂TiO₃ whisker:: TIBREX HGA available from Kawatetsu Kogyo K. K., average length: 10-20 µm, average diameter: 0.2-0.5 µm.
[4] Release agent
   - EB-P:: Ethylene-bis(stearylamide) compound available from Kao Corp., Kao Wax EB-P, softening point: 144°C.
   - WH:: Ethylene-bis(stearylamide) compound available from Kyoeisha Yushikagaku K. K., LIGHTAMIDE WH-255, softening point: 250°C.
   - PPO:: Polypropylene oligomer modified with maleic anhydride available from Sanyo Chemical Industries, Ltd., Umex 2000.
   - Ca-St:: Calcium stearate.
   - PE-Wax:: Polyethylene wax available from Mitsui Petrochemical Industries, Ltd., 400P.

### Examples 1-4, Comparative Examples 1-5

Amorphous nylon (AmNy), modified polyethylene (CMPE) and various release agents in proportions as shown in Table 1 were blended at 280°C and 250 rpm in a double-screw extruder of 45 mm in diameter (L/D = 30). Potassium titanate (K₂TiO₃) whisker in a proportion as shown in Table 1 was supplied into the extruder at an intermediate position thereof, and further blending was conducted to obtain composition pellets.

The resultant pellets were injection-molded to produce specimens for measuring bending strength, flexural modulus, release load and kinetic friction coefficient. The results are shown in Table 1.

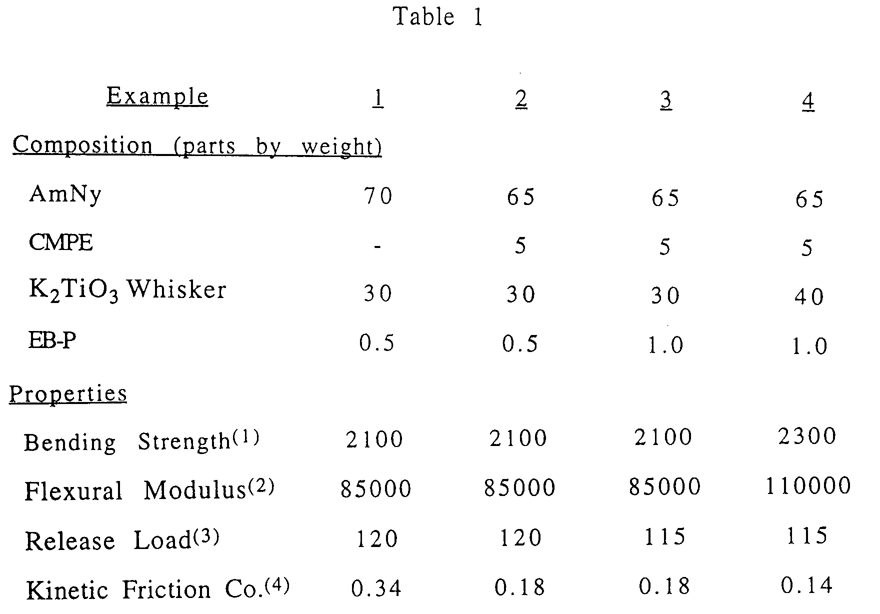

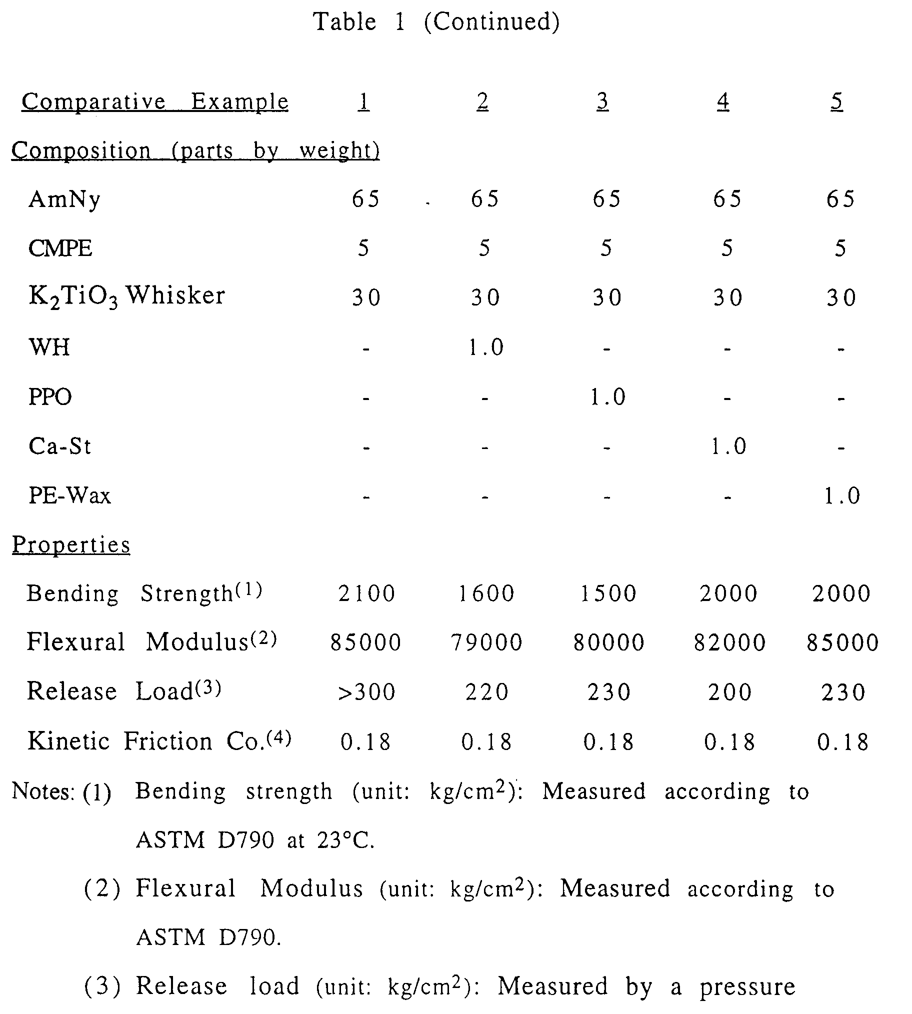

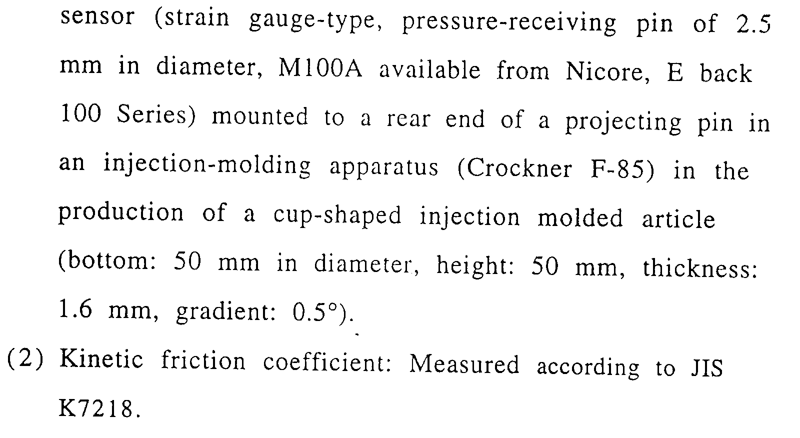

As is clear from Table 1, the compositions of Examples 1-4 showed larger bending strength and flexural modulus with smaller release load. On the other hand, the composition of Comparative Example 1 suffered from extremely large release load, resulting in cracking of injection-molded articles at the release time. Also, the compositions of Comparative Examples 2-5 showed smaller bending strength and flexural modulus with larger release load.

As described above, since the whisker-reinforced thermoplastic resin compositions of the present invention comprise an amorphous nylon (or resin components consisting of amorphous nylon and high-density polyethylene modified with unsaturated carboxylic acid or its anhydride), whisker and a particular release agent having a softening point of 100-200°C, they show excellent release characteristics without suffering from a decrease in mechanical properties Such Whisker-reinforced thermoplastic resin compositions of the present invention are highly suitable as materials for small mechanical parts for office automation equipment, gears, various sliding parts, etc.

## Claims

1. A whisker-reinforced thermoplastic resin composition comprising:
(a) 50-97 weight % of an amorphous nylon;
(b) 3-50 weight % of whisker; and
(c) 0.1-5 parts by weight of an ethylene-bis(stearylamide) compound having a softening point of 100-200°C, per 100 parts by weight of the total of (a) and (b).

2. A whisker-reinforced thermoplastic resin composition according to claim 1, wherein (a) said amorphous nylon is 60-90 weight %; (b) said whisker is 10-40 weight %; and (c) said ethylene-bis(stearylamide) compound is 0.5-2 parts by weight per 100 parts by weight of the total of (a) and (b).

3. A whisker-reinforced thermoplastic resin composition comprising:
(a) 10-97 weight % of an amorphous nylon;
(b) 0-40 weight % of a modified polyethylene, which is high-density polyethylene modified with an unsaturated carboxylic acid or its anhydride;
(c) 3-50 weight % of whisker; and
(d) 0.1-5 parts by weight of an ethylene-bis(stearylamide) compound having a softening point of 100-200°C, per 100 parts by weight of the total of (a), (b) and (c).

4. A whisker-reinforced thermoplastic resin composition according to claim 3, wherein (a) said amorphous nylon is 30-85 weight %; (b) said modified polyethylene is 10-40 weight %; (c) said whisker is 5-40 weight %; and (d) said ethylene-bis(stearylamide) compound is 0.5-2 parts by weight per 100 parts by weight of the total of (a), (b) and (c).

5. A whisker-reinforced thermoplastic resin composition according to claim 3 or claim 4, wherein the proportion of the unsaturated carboxylic acid or its derivative is 0.1-1 weight % in said modified polyethylene.

6. A whisker-reinforced thermoplastic resin composition as defined in any one of claims 3 to 5, except that component (b) consists not of the modified polyethylene alone but of a combination of said modified polyethylene and 70 weight % or less of unmodified high-density polyethylene, based on the combined weight of said modified polyethylene and said unmodified high-density polyethylene.

7. A whisker-reinforced thermoplastic resin composition as claimed in any preceding claim, wherein the whiskers have an average length of 10 to 20 micrometres and an average diameter of 0.2 to 0.5 micrometres.

8. A whisker-reinforced thermoplastic resin composition as claimed in any preceding claim, wherein the whiskers are of potassium titanate, aluminium borate, calcium carbonate or magnesium hydroxide.

9. A whisker-reinforced thermoplastic resin composition as claimed in any preceding claim, wherein the whiskers are surface-coated with an epoxy-silane coupling agent.

10. A whisker-reinforced thermoplastic resin composition as claimed in any preceding claim, wherein the ethylene-bis(stearylamide) compound has a softening point of 120-160°C.
